# EUROPEAN PATENT SPECIFICATION

(11) **EP 3 385 344 B1**
(45) Date of publication and mention of the grant of the patent: **29.06.2022**
(21) Application number: 16870828.7
(22) Date of filing: 02.12.2016
(51) Int. Cl.: C09D 133/00, B05D 7/14, B32B 15/08, B32B 15/082, B32B 15/085, B32B 15/18, C09D 5/02, C09D 7/40, C10M 159/06, C10M 173/02, C10M 139/00, C10M 145/10, C10N 30/00, C10N 30/06, C10N 30/08, C10N 40/24, C10N 50/02, C09D 5/00, C09D 133/08, C09D 7/63, C09D 7/65, C08L 23/06, C08K 5/098

(54) **LUBRICANT COATING FOR STAINLESS STEEL PLATES, AND LUBRICATED STAINLESS STEEL PLATES**
SCHMIERMITTELBESCHICHTUNG FÜR ROSTFREIE STAHLPLATTE UND GESCHMIERTE ROSTFREIE STAHLPLATTEN
FILM LUBRIFIANT POUR PLAQUES D'ACIER INOXYDABLE, ET PLAQUES D'ACIER INOXYDABLE LUBRIFIÉES

(30) Priority: 04.12.2015 JP 2015237331; 04.11.2016 JP 2016216584
(43) Date of publication of application: 10.10.2018
(73) Proprietor: JFE Steel Corporation, Tokyo 100-0011 (JP)
(72) Inventor: HIRASAWA Junichiro, Tokyo 100-0011 (JP); YANO Takayoshi, Tokyo 100-0011 (JP); ISHIKAWA Shin, Tokyo 100-0011 (JP); KAMI Chikara, Tokyo 100-0011 (JP)
(74) Representative: Grünecker Patent- und Rechtsanwälte PartG mbB
(86) International application number: PCT/JP2016/085940
(87) International publication number: WO 2017/094893

(56) References cited:
- EP-A1- 1 491 603
- JP-A- H0 711 089
- JP-A- H09 156 029
- JP-A- H09 221 691
- JP-A- 2000 038 539
- JP-A- 2003 277 950
- JP-A- 2008 248 076
- JP-A- 2015 183 150
- JP-B2- 4 122 531

## Description

### TECHNICAL FIELD

The present invention relates to a coating material effecting surface lubrication that is useful in press forming of a stainless steel sheet, and a lubricated stainless steel sheet with such a coating material applied thereto.

### BACKGROUND ART

When compared with common mild steel, stainless steel sheets have a higher strength and are slid during the press forming under a higher stress from the stamping tools, leading to conspicuous damage (galling) on the steel sheet surface, so that excellent surface lubrication is needed on the surface of a stainless steel sheet.

Generally, lubricating oil is widely used in order to obtain lubricity in processing, while in some cases, lubricating oil harms a working environment by, for example, dripping down or diffusion into air due to its volatility.

As other substance than lubricating oil that effects lubrication on the steel sheet surface, there is a solid lubricating film formed by adding such a lubricant as wax to a resin and drying the resultant mixture by baking. The solid lubricating film is generally excellent in lubricity and galling prevention properties compared to lubricating oil, and has no volatility by itself, thus keeping a working environment well.

Wax is widely used as a lubricant, and particularly a low-melting-point wax is often used because of its low coefficient of friction. At the same time, wax has a drawback of being hard to solidify, and a large amount of wax added in order to improve the lubricity may not be solidified upon the drying of a coating material in a baking furnace, for instance, which makes the coating film remain sticky.

Patent Literature 1 describes, in its claim 1, a film removal type lubricated steel sheet comprising: (a) a specified acrylic resin; and as a mixed lubricant, (b) metallic soap or the like and (c) 3 to 20 wt% of a polyethylene based wax having a melting point Tm of 70 ≤ Tm ≤ 150°C with respect to the solid content of (a). This document discloses the finding that a lubricated steel sheet including a mixed lubricant of (b) metallic soap or the like and (c) a specified, high-melting-point polyethylene based wax is excellent in deep drawability and galling prevention properties. The result of Comparative Example 7 shows that when only the specified high-melting-point wax was used as a single lubricant, the galling prevention properties were inferior. Furthermore, the results of Comparative Examples 9 and 12 show that when the mixing amount of the specified high-melting-point wax was more than 20 wt%, the adhesion to a steel sheet was inferior and the deep drawability and galling prevention properties deteriorated (see paragraph [0021] and Table 2 (Part 3)).

Patent Literature 2 describes a cold rolled stainless steel sheet comprising, apart from a specified acrylic resin, an organic solid wax having a melting point of 60°C or higher as a lubricant (claim 1), which sheet is excellent in formability and galling prevention properties (claim 5). The amount of the wax as contained in the coating material composition is to be about 1 to 10 mass% on the total resin solid content of the composition (paragraph [0038]), and, in Examples, waxes with low-melting points (68°C to 107°C) were used in amounts of 2.04 to 11.1 parts by mass with respect to 100 parts by mass of the acrylic resin, that is to say, in small amounts. The invention of Patent Literature 2 has been made based on the technical understanding that a high-melting-point wax has a high coefficient of friction by itself and thus a relatively low-melting-point wax which has a lower coefficient of friction is used in order to lower a coefficient of friction.

Even though the invention of Patent Literature 2 has effects as a lubricated stainless steel sheet, it still needs to be improved in association with continuous pressing or extremely deep drawing performed on stainless steel.

Furthermore, when a low-melting-point wax which has a melting point lower than 115°C is added in an amount of more than 20 wt% with respect to a resin solid content in order to improve lubricity, because the melting point of the wax is low, the coating material is not solidified even by drying and remains sticky, and the applied coating adheres to the periphery when a steel sheet is handled, leading to the deterioration of the lubricating effect of the applied coating and the need of cleaning the periphery.

### CITATION LIST

### PATENT LITERATURE

Patent Literature 1: JP 9-156029 A
Patent Literature 2: JP 2008-248076 A

### SUMMARY OF INVENTION

### TECHNICAL PROBLEMS

The present invention aims at solving the above problems of conventional techniques and providing a lubricating coating material which imparts excellent press formability to a stainless steel sheet having a higher strength than that of general mild steel and a lubricated stainless steel sheet using the same.

### SOLUTION TO PROBLEMS

As a result of the detailed studies as made on the composition of a lubricating coating material in order to solve the above problems of conventional techniques, the present inventors have found against the idea of Patent Literature 2 as above that, if a high-melting-point wax is used in a large amount, that is to say, in an amount exceeding 20 parts by mass with respect to 100 parts by mass of an acrylic resin, the deep drawability and galling prevention properties will adequately be attained without the use of the lubricant mixture of Patent Literature 1, whereupon, moreover, the use of a large amount of high-melting-point wax for a lubricating coating material, which brought about undesirable results in Patent Literature 1, is contrary to the technical understanding underlying the invention of Patent Literature 2 relating to stainless steel, with such finding having led to the present invention.

Specifically, the present invention provides the following.
(1) A lubricating coating material for a stainless steel sheet comprising an acrylic resin, a polyethylene wax and an organic calcium compound, wherein the polyethylene wax has a melting point of 115°C or higher, the organic calcium compound is an overbasic petroleum calcium sulfonate, the lubricating coating material contains from more than 20 parts by mass to 50 parts by mass of the polyethylene wax with respect to 100 parts by mass of the acrylic resin, and the lubricating coating material contains 1 to 10 parts by mass of the organic calcium compound with respect to 100 parts by mass of the acrylic resin.
(2) A method of manufacturing the lubricating coating material for a stainless steel sheet according to (1), comprising using an aqueous solvent to emulsify the polyethylene wax and adding the polyethylene wax in emulsion form.
(3) A method of manufacturing a lubricated stainless steel sheet comprising applying the lubricating coating material for a stainless steel sheet according to (1) to a stainless steel sheet, and hot-air drying the lubricating coating material so as to form a lubricating coating film at a mass after drying of 0.5 to 2.5 g/m 2 for each side of the stainless steel sheet.
(4) A lubricated stainless steel sheet having the lubricating coating material for a stainless steel sheet according to (1) applied thereto at a mass after drying of 0.5 to 2.5 g/m 2 for each side of the lubricated stainless steel sheet.

### ADVANTAGEOUS EFFECTS OF INVENTION

A lubricated stainless steel sheet excellent in press formability (deep drawability and galling prevention properties) is provided by using the lubricating coating material of the present invention.

### BRIEF DESCRIPTION OF THE DRAWINGS

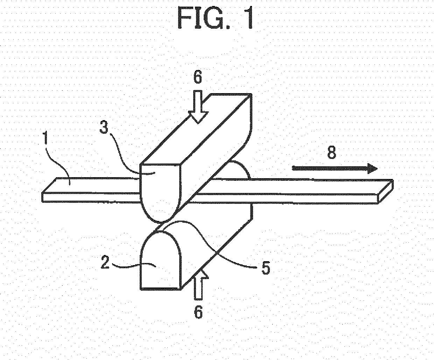

[FIG. 1] FIG. 1 is a schematic diagram illustrating an evaluation method of the coefficient of friction and galling prevention properties in the present invention.

### DESCRIPTION OF EMBODIMENTS

### <Lubricating coating material for a stainless steel sheet>

The lubricating coating material for a stainless steel sheet of the present invention is an acrylic resin-containing aqueous coating material and contains from more than 20 parts by mass to 50 parts by mass of a polyethylene wax having a melting point of 115°C or higher with respect to 100 parts by mass of an acrylic resin.

### (Acrylic resin)

The acrylic resin used in the present invention is not particularly limited. Preferably, a resin obtained by polymerizing or copolymerizing one, or two or more of the monomers selected from the group consisting of the following 1. to 5. is used: 1. aliphatic acids such as acrylic acid, methacrylic acid, maleic acid, maleic anhydride, itaconic acid, and fumaric acid; 2. esters obtained by methylating, ethylating, isopropylating, butylating, and 2-ethyl hexylating the aliphatic acids mentioned in 1. above; 3. amides obtained from, for example, the aliphatic acids of 1. above and ammonia; 4. styrene; and 5. compounds obtained by adding polyoxyethylene to the aliphatic acids mentioned in 1. above. Exemplary methods of polymerization or copolymerization include a solution polymerization method, an emulsion polymerization method, a suspension polymerization method or the like. Additives to be added to an acrylic resin include a surfactant, a rust-preventive agent, an extreme pressure agent, a pH adjuster and the like which are generally and widely used for a coating material, and can be contained in an amount of 10 parts by mass or less in total with respect to 100 parts by mass of the acrylic resin. While a solvent for a lubricating coating material may be either an aqueous solvent or an organic solvent, an aqueous solvent is preferable.

### (Polyethylene wax having a melting point of 115°C or higher)

A polyethylene wax to be used is not limited as long as the polyethylene wax has a melting point of 115°C or higher. A middle to high density polyethylene wax (having a density of 0.930 g/cm³ or more) is preferably used. When a polyethylene wax having a melting point lower than 115°C is added in an amount of more than 20 parts by mass with respect to 100 parts by mass of the acrylic resin, a coating material is not easily solidified by drying, which causes stickiness and thus a polyethylene wax having a melting point of 115°C or higher is used. A high density polyethylene wax (having a density of 0.942 g/cm³ or more) having a melting point of 120°C or higher is particularly preferred, and a polyethylene wax having a melting point of 130°C or higher is more preferred. The melting point of 145°C or lower is preferred. When the melting point is too high, a stiff film is obtained and considerable film peeling may occur by contacting with stamping tools in press forming.

The polyethylene wax having a melting point of 115°C or higher is preferably emulsified because when an emulsified polyethylene wax is added to an acrylic resin-containing aqueous coating material, the emulsified polyethylene wax uniformly mixes therein, so that a lubricating coating material having excellent characteristics is obtained.

The mean particle diameter of the emulsified polyethylene wax is preferably less than 1.0 µm. As the mean particle diameter is smaller, the polyethylene wax is uniformly dispersed in a film. The mean particle diameter is more preferably 0.2 µm or less in order for more uniform dispersion to be carried out.

With respect to the stainless steel sheet, to which a higher stress is applied during the press forming, addition of the wax in an increased amount as compared with the case of mild steel, that is to say, in an amount exceeding 20 parts by mass with respect to 100 parts by mass of the acrylic resin has proved effective. It was further revealed that because a polyethylene wax having a high melting point of 115°C or higher has a high coefficient of friction by itself, when the amount of addition is 20 parts by mass or less with respect to 100 parts by mass of the acrylic resin, the coefficient of friction of the lubricating coating film is not sufficiently reduced and thus the sufficient effect of improving lubricity is not obtained. On the other hand, even if the amount of addition is more than 50 parts by mass, the effect of improving lubricity is not enhanced any more. Therefore, the amount of addition is from more than 20 parts by mass to 50 parts by mass. As the addition amount of polyethylene wax having a melting point of 115°C or higher with respect to a resin solid content is larger, the coefficient of friction of a coating film is reduced, while when the coefficient of friction is too small, a coil may crush by its own weight or a sheet may drop when being carried around, and therefore the amount of addition is more preferably 40 parts by mass or less and even more preferably 30 parts by mass or less with respect to 100 parts by mass of the acrylic resin so that sufficient lubricity can be obtained in common press forming of stainless steel.

### (Other additives)

A surfactant, a rust-preventive agent, an extreme pressure agent, a pH adjuster and the like which are generally and widely used for a coating material can be contained in an amount of 10 parts by mass or less in total with respect to 100 parts by mass of the acrylic resin. While a solvent for an aqueous coating material mainly contains water and may contain a small amount of an organic solvent, the solvent is preferably an aqueous solvent so that an emission amount of a volatile organic solvent in a lubricating coating material can be reduced as much as possible.

The present invention revealed the following for the first time.
1) In a lubricating coating material obtained by using a specified amount of low-melting-point wax having a low coefficient of friction according to the basic technical idea of Patent Literature 2, when the addition amount of wax is 20 parts by mass or less with respect to 100 parts by mass of the acrylic resin, sufficient galling prevention properties may not be obtained in high stress press forming of a stainless steel sheet and thus galling prevention properties need to be improved in high stress press forming of a stainless steel sheet. Since a high-melting-point polyethylene wax having a melting point of 115°C or higher has a higher coefficient of friction by itself than that of a low-melting-point wax, it is anxiously considered that when a high-melting-point polyethylene wax is added in the same amount as that of a low-melting-point wax, the frictional resistance may not be sufficiently reduced, while when a high-melting-point wax is added in an amount of more than 20 parts by mass with respect to 100 parts by mass of the acrylic resin, since the proportion of the acrylic resin is decreased, the influence of an acrylic resin having a high coefficient of friction is reduced as well as the coefficient of friction reducing effect of the high-melting-point polyethylene wax appears, thereby obtaining excellent lubricity which cannot be obtained by the prior art.
   While the reason for this is not fully understood, it is believed as follows.
   It is presumed that since a high-melting-point wax has high viscosity compared to a low-melting-point wax and, in contact sliding between stamping tools and a steel sheet, is apt to remain in a space therebetween, it is effective in the deep drawability and galling prevention properties.
2) Evaluation of galling prevention properties in the present invention is performed in a different way from Patent Literatures 1 and 2, as described in Examples. Evaluation is performed by observing galling in square tube drawing in Patent Literature 1 and galling in Erichsen cupping (cylinder drawing) in Patent Literature 2. The evaluation severity (magnitude of contact stress between the stamping tools and a sheet) is approximately in the order of: the present invention > Patent Literature 1 > Patent Literature 2, and the evaluation method in the present invention for confirming that "the coefficient of friction does not increase even if a single test sample is repeatedly slid twenty times under high stress (about 200 MPa)" is suitable for evaluating stainless steel. Because forming of stainless steel may not complete by one pressing and stainless steel may undergo press forming multiple times, galling prevention properties of stainless steel is properly evaluated only by a severe evaluation method of press forming. Such a severe evaluation of press forming is not performed in any prior art.

### (Organic calcium compound)

In press forming of a stainless steel sheet, forming may not be completed by one pressing and may be performed by multiple pressings. In this regard, there is a phenomenon called galling in which an applied coating is damaged by pressings at the beginning and thereafter the coefficient of friction increases. In order to improve galling prevention properties, an organic calcium compound is added as necessary.

An organic calcium compound which is overbasic petroleum calcium sulfonate such as overbasic alkylbenzene calcium sulfonate, overbasic alkylnaphthalene calcium sulfonate and overbasic alkylaryl calcium sulfonate is used.

When the organic calcium compound is added in an amount of 1 to 10 parts by mass with respect to 100 parts by mass of the acrylic resin, the effect of improving galling prevention properties can be obtained, and therefore the organic calcium compound is added as necessary. When the amount of the organic calcium compound is less than 1 part by mass, the effect of improving galling prevention properties cannot be obtained. In addition, when the organic calcium compound is added in an amount of more than 10 parts by mass, the effect is not enhanced any more.

### (Stainless steel)

The lubricating coating material for a stainless steel sheet of the present invention can be applied to any stainless steel sheet regardless of the stainless steel type and provides a lubricated stainless steel sheet excellent in deep drawability and galling prevention properties. The lubricating coating material is particularly suitable for press forming of a ferritic stainless steel sheet, in which drawing processing is employed.

### <Method of manufacturing a lubricated stainless steel sheet>

The lubricating coating material for a stainless steel sheet of the present invention is applied to the surface of a stainless steel sheet and dried. The application method is not limited and the examples thereof include spray coating, roll coater coating, immersion coating, and brush coating. The solid content (acrylic resin, polyethylene wax and calcium compound) concentration of the coating material of the present invention can be adjusted according to the application and drying methods used. The solid content concentration is preferably 1 mass% to 50 mass%. While a general baking furnace or the like can be used for drying the coating material, the lubricating coating material of the present invention is easily solidified and thus can be sufficiently solidified by simple hot air drying. The application is performed on one side or both sides of a steel sheet according to the intended use thereof, and the coating amount after drying is preferably 0.5 to 2.5 g/m² for each side.

When the coating amount after drying is 0.5 to 2.5 g/m², film damage hardly occurs, galling prevention properties are excellent, the lubricating effect is sufficient, and the coating film rarely comes off during the sliding to deposit on the stamping tools and adversely affect the press forming. More preferably, the coating amount ranges from 0.8 g/m² to 2.0 g/m², with a coating amount not exceeding 1.5 g/m² being even more preferable.

### (Frictional resistance)

Since coefficients of friction are different according to the measurement method and the absolute values of the coefficients of friction are different according to the measurement method even in the same sample of the lubricating coating film obtained in the present invention, the evaluation cannot be carried out using the absolute values, while generally, when a coefficient of friction is high upon relative comparison, slipperiness is inferior, leading to deterioration of press formability. On the other hand, when a coefficient of friction is too low, a coil which is made of a steel strip may crush by its own weight or excessive slipperiness may occur to cause problem in handling of a sheet.

### EXAMPLES

The present invention is specifically described below in reference to Examples and Comparative Examples, to which the present invention is in no way limited.

Examples 2, 4, 7 to 10, 12 to 14, 16 and 18; reference examples 1, 3, 5, 6, 11, 15 and 17; comparative examples 1 to 6.

Aqueous coating material containing an acrylic resin, whose compositions are shown in Table 1, were each prepared, uniformly applied to a stainless steel sheet (2D-finished SUS444 (19 mass% Cr, 2 mass% Mo, 0.4 mass% Nb)) by spraying and dried by hot air from a dryer so as to perform the application of the relevant coating material on both sides of the sheet, and various characteristics were evaluated. It is noted that every coating material was adjusted to have a solid content (acrylic resin, polyethylene wax and calcium compound) concentration of 10 mass%. The results are shown in Table 1. A polyethylene wax to be used was emulsified and mixed in an aqueous coating material.

### <Evaluation method>

1. Regarding a coefficient of friction, a pulling load was measured using an instrument shown in FIG. 1, that is, a sliding test instrument in which a sample sheet having a thickness of 1.5 mm, length of 200 mm, and width of 20 mm is interposed between upper and lower stamping tools each having a curvature 5 of R20 and is pulled in a pulling load direction 8 while being pressed in a pressing load direction 6, and the pulling load is measured. The coefficient of friction was calculated by the formula: pulling load / pressing load. The test was conducted under the following conditions: Of the stamping tools, the material was SKD11, the radius of curvature R was 20, and the sample width was 20 mm; the sliding distance was 100 mm; the pulling speed was 20 mm/s; and the pressing load was 3920 N. The contact area between a stamping tool and the sample sheet was about 20 mm² (20 mm wide x about 1 mm), and the surface stress was about 200 MPa (= 3920 N / 20 mm²) .
2. Regarding the stickiness, a stainless steel sheet without a coating film was pressed against a stainless steel sheet, on which a lubricating coating film has been formed, at a surface pressure of 0.01 MPa and after peeling the sheets from each other, the stainless steel sheet without a coating film was determined whether or not the lubricating coating film was transferred to the surface thereof by measuring a C count amount using X-ray fluorescence. When the C amount did not increase, the lubricating coating film was evaluated as non-sticky. When the C amount on the surface of the stainless steel sheet without a coating film increased, the lubricating coating film was evaluated as sticky.
3. Deep drawability was evaluated by measuring a limiting drawing ratio (LDR). A cylindrical punch (diameter d = 33 mm) was pressed into a disk-shaped specimen and the maximum specimen diameter (D (mm)) that allows a complete drawing without fracture was found so as to calculate the LDR from the formula D/d. The measurement was conducted under the following conditions: The R of the punch shoulder was 3 mm; the punch feed speed was 1 mm/sec; the blank holder load was 10 kN; and the R of the blank holder shoulder was 3 mm.
4. Regarding galling prevention properties, one sample sheet was repeatedly slid twenty times without polishing stamping tools in the middle thereof using the sliding test instrument shown in FIG. 1, and when the coefficient of friction did not increase, the galling prevention properties were evaluated as good. The expression that the coefficient of friction did not increase means that "even if a single sample sheet was repeatedly slid twenty times under high stress (about 200 MPa), the coefficient of friction at the twentieth sliding was less than 0.15", which was considered to indicate good galling prevention properties, and when the coefficient of friction was "0.15 or more", the galling prevention properties were evaluated as poor.

**[Table 1]**

| Number | Composition of coating material | | | | | | | | | | Coating amount (g/m²) | Characteristics evaluation | | | |
|---|---|---|---|---|---|---|---|---|---|---|---|---|---|---|---|
| | Acrylic resin | | Polyethylene wax | | | Organic calcium compound | | | P-based additive^{∗)} | | | | | | |
| | Type | Mass % in solid content | Mass % in solid content | Parts by mass with respect to 100 parts by mass of resin | Melting point (° C) | Type | Mass % in solid content | Parts by mass with respect to 100 parts by mass of acrylic resin | Mass % in solid content | Parts by mass with respect to 100 parts by mass of acrylic resin | | Coefficient of friction | Stickiness | LDR value | Galling prevention properties |
| Example 1 | Acrylic 1 | 80 | 20 | acrylic 25 | 138 | Not added Not added | 0 | 0 | - | - | 1.0 | 0.10 | NO | 2.15 | Good |
| Example 2 | Acrylic 1 | 78 | 17 | 22 | 138 | B | 5 | 6 | - | - | 1.0 | 0.10 | NO | 2.15 | Good |
| Example 3 | Acrylic 1 | 70 | 30 | 43 | 138 | Not added | 0 | 0 | - | - | 1.1 | 0.09 | NO | 2.18 | Good |
| Example 4 | Acrylic 1 | 67 | 26 | 39 | 138 | B | 7 | 10 | - | - | 1.0 | 0.09 | NO | 2.18 | Good |
| Example 5 | Acrylic 2 | 80 | 20 | 25 | 138 | Not added | 0 | 0 | - | - | 1.0 | 0.10 | NO | 2.15 | Good |
| Example 5 Example 6 | Acrylic 2 Acrylic 2 | 70 | 30 | 43 | 138 | Not added | 0 | 0 | - | - | 1.1 | 0.09 | NO | 2.18 | Good |
| Example 7 | Acrylic 2 | 78 | 17 | 22 | 138 | B | 5 | 6 | - | - | 0.5 | 0.11 | NO | 2.12 | Good |
| Example 8 | Acrylic 2 | 78 | 17 | 22 | 138 | B | 5 | % | - | - | 0.8 | 0.10 | NO | 2.15 | Good |
| Example 9 | Acrylic 2 | 76 | 16 | 21 | 138 | B | 1 | 1 | 7 | 9 | 1.0 | 0.10 | NO | 2.15 | Good |
| Example 10 | Acrylic 2 | 66 | 29 | 44 | 138 | B | 5 | 8 | - | - | 1.0 | 0.09 | NO | 2.18 | Good |
| Example 11 | Acrylic 2 | 78 | 19 | 24 | 138 | A | 3 | 4 | - | - | 1.2 | 0.10 | NO | 2.15 | Good |
| Example 12 | Acrylic 2 | 78 | 17 | 22 | 138 | B | 5 | 6 | - | - | 1.0 | 0.10 | NO | 2.15 | Good |
| Example 13 | Acrylic 2 | 78 | 17 | 22 | 138 | B | 5 | 6 | - | - | 2.0 | 0.09 | NO | 2.18 | Good |
| Example 14 | Acrylic 2 | 78 | 17 | 22 | 138 | B | 5 | 6 | - | - | 2.5 | 0.09 | NO | 2.18 | Good |
| Example 15 | Acrylic 1 | 80 | 20 | 25 | 132 | Not added | 0 | 0 | - | - | 1.0 | 0.09 | NO | 2.15 | Good |
| Example 15 | Acrylic 2 | 76 | 19 | 25 | 132 | B | 5 | 7 | - | - | 1.1 | 0.09 | NO | 2.15 | Good |
| Example 17 | Acrylic 1 | 80 | 20 | 25 | 120 | Not added | 0 | 0 | - | - | 1.1 | 0.10 | NO | 2.12 | Good |
| Example 18 | Acrylic 2 | 76 | 19 | 25 | 120 | B | 5 | 7 | - | - | 0.9 | 0.09 | NO | 2.12 | Good |
| Comparative Example 1 | Acrylic 1 | 90 | 10 | 11 | 138 | Not added | 0 | 0 | - | - | 1.0 | 0.12 | NO | 2.06 | Poor |
| Comparative Example 2 | Acrylic 1 | 93 | 7 | 8 | 106 | Not added | 0 | 0 | - | - | 1.0 | 0.10 | NO | 2.06 | Poor |
| Comparative Example 3 | Acrylic 2 | 90 | 7 | 8 | 106 | A | 3 | 3 | - | - | 1.1 | 0.10 | NO | 2.06 | Poor |
| Comparative Example 4 | Acrylic 2 | 90 | 10 | 11 | 138 | Not added | 0 | 0 | - | - | 1.0 | 0.12 | NO | 2.06 | Poor |
| Example 4 Comparative Example 5 | Acrylic 2 | 80 | 20 | 25 | 106 | Not added | 0 | 0 | - | - | 1.0 | 0.08 | YES | 2.18 | Good |
| Example 5 Comparative Example 6 | Acrylic 1 | 87 | 10 | 11 | 138 | A | 3 | 3 | - | - | 1.0 | 0.12 | NO | 2.06 | Poor |

| | | | | | | | | | | | | | | | |
|---|---|---|---|---|---|---|---|---|---|---|---|---|---|---|---|
| Not added | | | | | | | | | | | | | | | |

Types of organic calcium compounds shown in Table 1 were as follows.
A: Calcium stearate
B: Overbasic petroleum calcium sulfonate

Types of resins shown in Table 1 were as follows. Acrylic 1: Copolymer of styrene, butyl methacrylate, methacrylic acid and ethylenically unsaturated carboxylic acid (mass ratio, 25:30:24:21)
Acrylic 2: Copolymer of styrene, butyl methacrylate and methacrylic acid (mass ratio, 25:51:24)
The P-based additive in Table 1: *) Oleyl acid phosphate (extreme pressure agent)

### <Evaluation of Examples and Comparative Examples>

The results of Examples 1 to 18 shown in Table 1 reveal that when the specified amount, which is larger than the conventionally added amount, of high-melting-point polyethylene wax is added with respect to 100 parts by mass of the acrylic resin, a lubricating coating material having excellent formability to a stainless steel sheet can be obtained. While the coating material containing no organic calcium compound were excellent in galling prevention properties in Examples 1, 3, 5, 6, 15 and 17 shown in Table 1, the coating material containing an organic calcium compound showed further improved galling prevention properties. In Comparative Examples 1, 4 and 6 in which the amount of high-melting-point polyethylene wax is small with respect to the resin amount, galling prevention properties are poor. The result of Comparative Example 5 reveals that when a large amount of low-melting-point polyethylene wax with respect to 100 parts by mass of the acrylic resin is added, the lubricating coating material having stickiness is obtained. The results of Comparative Examples 2 and 3 demonstrate that when a low-melting-point wax is used in a lubricating coating material for stainless steel, the coefficient of friction is low, while the galling prevention properties are poor. Furthermore, in Comparative Examples 1, 2, 3, 4 and 6 in which the addition amount of polyethylene wax is small, the LDR values are lower than those in Examples, resulting in the inferior deep drawability.

### INDUSTRIAL APPLICABILITY

When the lubricating coating material for a stainless steel sheet of the present invention is applied to a stainless steel sheet, a lubricated stainless steel sheet excellent in formability such as deep drawability and galling prevention properties can be obtained. The lubricating coating material of the present invention allows a stainless steel sheet to be easily formed by high stress press forming, and therefore the application of stainless steel excellent in corrosion resistance and high temperature characteristics can be broadened mainly into the fields of automobiles, home electronics and kitchens, which is industrially useful. In particular, ferritic stainless steel is inexpensive compared to austenitic stainless steel because of its not containing Ni and moreover is a material of which the demand is expected to increase in the future owing to the advantage of being free from the possibility of stress corrosion cracking (SCC). Since ferritic stainless steel has poor ductility and an inferior stretch formability due to a large amount of Cr being contained compared to mild steel, there is a problem in that its formability is limited, while if the lubricating coating material for a stainless steel sheet of the present invention is used, it is possible to carry out wide range of forming, obtaining industrial products in which the characteristics of a material are utilized.

### REFERENCE SIGNS LIST

1: Sample sheet 2: Lower stamping tool 3: Upper stamping tool 5: Curvature 6: Pressing load direction 8: Pulling load direction

## Claims

1. A lubricating coating material for a stainless steel sheet comprising an acrylic resin, a polyethylene wax and an organic calcium compound, wherein the polyethylene wax has a melting point of 115°C or higher, the organic calcium compound is an overbasic petroleum calcium sulfonate, the lubricating coating material contains from more than 20 parts by mass to 50 parts by mass of the polyethylene wax with respect to 100 parts by mass of the acrylic resin, and the lubricating coating material contains 1 to 10 parts by mass of the organic calcium compound with respect to 100 parts by mass of the acrylic resin.

2. A method of manufacturing the lubricating coating material for a stainless steel sheet according to claim 1, comprising using an aqueous solvent to emulsify the polyethylene wax and adding the polyethylene wax in emulsion form.

3. A method of manufacturing a lubricated stainless steel sheet comprising applying the lubricating coating material for a stainless steel sheet according to claim 1 to a stainless steel sheet, and hot-air drying the lubricating coating material so as to form a lubricating coating film at a mass after drying of 0.5 to 2.5 g/m² for each side of the stainless steel sheet.

4. A lubricated stainless steel sheet having the lubricating coating material for a stainless steel sheet according to claim 1 applied thereto at a mass after drying of 0.5 to 2.5 g/m² for each side of the lubricated stainless steel sheet.

## Patentansprüche

1. Schmierbeschichtungs-Material für ein rostfreies Stahlblech, umfassend ein Acrylharz, ein Polyethylenwachs und eine organische Calciumverbindung, wobei das Polyethylenwachs einen Schmelzpunkt von 115 °C oder darüber hat, die organische Calciumverbindung ein überbasisches Petroleum-Calciumsulfonat ist, das Schmierbeschichtungs-Material, bezogen auf 100 Massenteile des Acrylharzes, mehr als 20 Massenteile bis 50 Massenteile des Polyethylenwachses enthält und das Schmierbeschichtungs-Material, bezogen auf 100 Massenteile des Acrylharzes, 1 bis 10 Massenteile der organischen Calciumverbindung enthält.

2. Verfahren zum Herstellen des Schmierbeschichtungs-Materials für ein rostfreies Stahlblech nach Anspruch 1, umfassend Einsetzen eines wässrigen Lösungsmittels zum Emulgieren des Polyethylenwachses sowie Zusetzen des Polyethylenwachses in Emulsionsform.

3. Verfahren zum Herstellen eines geschmierten rostfreien Stahlblechs, umfassend Aufbringen des Schmierbeschichtungs-Materials für ein rostfreies Stahlblech nach Anspruch 1 auf ein rostfreies Stahlblech sowie Heißlufttrocknen des Schmierbeschichtungs-Materials, um einen Schmierbeschichtungs-Film in einer Masse von 0,5 bis 2,5 g/m² nach Trocknen für jede Seite des rostfreien Stahlblechs auszubilden.

4. Geschmiertes rostfreies Stahlblech, auf das das Schmierbeschichtungs-Material für ein rostfreies Stahlblech nach Anspruch 1 in einer Masse von 0,5 bis 2,5 g/m² nach Trocknen für jede Seite des geschmierten rostfreien Stahlblechs aufgebracht ist.

## Revendications

1. Matériau de revêtement lubrifiant destiné à une tôle d'acier inoxydable comprenant une résine acrylique, une cire de polyéthylène et un composé de calcium organique, la cire de polyéthylène ayant un point de fusion supérieur ou égal à 115 °C, le composé de calcium organique étant un sulfonate calcique de pétrole surbasé, le matériau de revêtement lubrifiant contenant de plus de 20 parties en masse à 50 parties en masse de la cire de polyéthylène pour 100 parties en masse de la résine acrylique, et le matériau de revêtement lubrifiant contenant de 1 à 10 parties en masse du composé de calcium organique pour 100 parties en masse de la résine acrylique.

2. Procédé de fabrication du matériau de revêtement lubrifiant destiné à une tôle d'acier inoxydable selon la revendication 1, comprenant l'utilisation d'un solvant aqueux pour émulsifier la cire de polyéthylène et l'ajout de la cire de polyéthylène sous forme d'émulsion.

3. Procédé de fabrication d'une tôle d'acier inoxydable lubrifiée comprenant l'application du matériau de revêtement lubrifiant destiné à une tôle d'acier inoxydable selon la revendication 1 sur une tôle d'acier inoxydable, et le séchage à l'air chaud du matériau de revêtement lubrifiant afin de former un film de revêtement lubrifiant avec une masse, après séchage, de 0,5 à 2,5 g/m² pour chaque côté de la tôle d'acier inoxydable.

4. Tôle d'acier inoxydable lubrifiée ayant le matériau de revêtement lubrifiant destiné à une tôle d'acier inoxydable selon la revendication 1 appliqué sur celle-ci avec une masse, après séchage, de 0,5 à 2,5 g/m² pour chaque côté de la tôle d'acier inoxydable lubrifiée.
